# EUROPEAN PATENT SPECIFICATION

(11) **EP 4 131 789 B1**
(45) Date of publication and mention of the grant of the patent: **30.10.2024**
(21) Application number: 21751949.5
(22) Date of filing: 08.07.2021
(51) Int. Cl.: H04B 1/707, H04B 1/7073, H04B 1/7097, H04B 1/3822, H04K 1/02, H04B 1/40

(54) **CDMA SECURE ENCODING METHOD AND SYSTEM, AND CDMA SECURE DECODING METHOD AND SYSTEM**
SICHERES CDMA-CODIERUNGSVERFAHREN UND -SYSTEM SOWIE SICHERES CDMA-DECODIERUNGSVERFAHREN UND -SYSTEM
PROCÉDÉ ET SYSTÈME DE CODAGE AMRC SÉCURISÉ, ET PROCÉDÉ ET SYSTÈME DE DÉCODAGE AMRC SÉCURISÉ

(30) Priority: 17.06.2021 CN 202110668883
(43) Date of publication of application: 08.02.2023
(73) Proprietor: CRSC Research & Design Institute Group Co., Ltd., Beijing 100070 (CN)
(72) Inventor: WANG, Guoying, Beijing 100070 (CN); YANG, Guanglun, Beijing 100070 (CN); YE, Feng, Beijing 100070 (CN); SUN, Guoying, Beijing 100070 (CN); ZHANG, Fusong, Beijing 100070 (CN); LI, Xuejian, Beijing 100070 (CN); SUN, Zhenyu, Beijing 100070 (CN); LV, Xianliang, Beijing 100070 (CN); ZHANG, Shengwen, Beijing 100070 (CN); DING, Huan, Beijing 100070 (CN); CHEN, Guang, Beijing 100070 (CN); XU, Yanwen, Beijing 100070 (CN)
(74) Representative: Haseltine Lake Kempner LLP
(86) International application number: PCT/CN2021/105123
(87) International publication number: WO 2022/262023

(56) References cited:
- WO-A2-2009/035583
- CN-A- 101 969 421
- CN-A- 106 157 588
- US-A- 5 377 226
- US-A1- 2003 161 411
- US-A1- 2004 184 512
- US-B1- 10 530 618
- YONG XIAO ET AL: "Electromagnetic compatibility design of power field service terminal", 2008 CHINA INTERNATIONAL CONFERENCE ON ELECTRICITY DISTRIBUTION (CICED 2008), 10-13 DEC. 2008, GUANGZHOU, CHINA, IEEE, PISCATAWAY, NJ, USA, 10 December 2008 (2008-12-10), pages 1 - 5, XP031517350, ISBN: 978-1-4244-3373-5

## Description

### TECHNICAL FIELD

The present disclosure belongs to the technical field of railway communication, and particularly relates to a CDMA security encoding and decoding method and system.

### BACKGROUND

In order to adapt to rapid development of China's high-speed railways and passenger dedicated lines and to guarantee safety of railway transportation, China has successfully developed a China train control system, which is divided into application levels 0-4 according to functional requirements and configuration.

With continuous development of Chinese railways in the European railway market, it is gradually noticed that train operation control systems of railways in Europe have a complex system, and various train control systems are not completely compatible, and therefore, it is necessary to develop a relevant signal transmission method and device that meet requirements for interconnection and intercommunication of a European railway operation control system.

An existing European train operation control system has poor anti-interference performance, is only suitable for short distance transmission, has a high bit error rate and a high reception sensitivity threshold, is not capable of multipath reception, etc., due to use of signal systems such as Frequency Shift Keying (FSK), Phase Shift Keying (PSK) and the like.

US2003/161411 A1 discloses a bi-phase ultra wide band transmitter that communicates a bi-phase time-modulated UWB signal to a bi-phase time-modulated coherent receiver. The transmitter performs a source and channel encoding operation on the data in an encoder. The source encoding may be a differential encoding. Output of the encoder is provided to a digital encoder, which produces a length and digital code that encodes the data with a particular user code for an individual user or service. The length and code type may be typical codes such as those used in CDMA systems. The output of the digital encoder is provided to a bi-phase wavelet selector and analog encoder, which maps the respective outputs from the digital encoder into a particular analog encoded time-sequence of wavelets. The output of the selector and encoder is provided to preconditioning circuitry which can pass filters and cleans a signal prior to amplification and transmission.

### SUMMARY

In order to meet the needs of the prior art, the present disclosure provides a CDMA security encoding and decoding method and system, which can meet the requirements for interconnection and intercommunication of the European railway operation control system, and solves the problem that the existing European train operation control system has poor anti-interference performance, is only suitable for short-distance transmission, has a high bit error rate and high reception sensitivity threshold, is not capable of multi-path reception, etc., due to use of signal systems such as Frequency Shift Keying (FSK), Phase Shift Keying (PSK) and the like.

The present disclosure is implemented through technical solutions defined in the appended claims.

Compared with a closest prior art, the technical solution of the present disclosure has beneficial effects as follows:

The present disclosure provides a CDMA security encoding method. Firstly, a digital signal is received to generate a baseband signal, then the baseband signal is encoded to obtain an encoded baseband signal, and then CDMA encoding is performed on the encoded baseband signal to obtain a CDMA encoded signal. The CDMA security encoding method is a new CDMA security encoding and decoding method that conforms to a loop line transmission module of the European train operation control system, which contributes to the interconnection and intercommunication of the European railway operation control system.

The present disclosure provides a CDMA security encoding and decoding method, so that train-to-ground communication air interface transmission of a railway signal device of the European train operation control system uses a CDMA signal system, and compared with conventional signal systems, such as FSK, PSK and the like, the CDMA signal system has advantages of high anti-interference performance, extremely low bit error rate, longer transmission distance, extremely low reception sensitivity threshold, multi-path reception and the like.

### BRIEF DESCRIPTION OF THE DRAWINGS

In order to explain the embodiments of the present disclosure or the technical solutions in the prior art more clearly, the drawings that need to be used in the description of the embodiments or the prior art will be briefly introduced below. Obviously, the drawings in the following description are only some embodiments of the present disclosure. For those of ordinary skill in the art, other drawings can be obtained based on these drawings without creative efforts.
FIG. 1 is an overall flow schematic diagram of a CDMA security encoding method of the present embodiments;
FIG. 2 is a structural block diagram of generation of a baseband signal of the present embodiments;
FIG. 3 is a structural block diagram of coupling processing of an analog signal and an encoded digital signal of the present embodiments;
FIG. 4 shows a structure block diagram of baseband signal encoding;
FIG. 5 is a structural block diagram of CDMA encoding of the present embodiments; and
FIG. 6 is a structural block diagram of CDMA decoding of the present embodiments.

### DETAILED DESCRIPTION

The technical solutions of the present disclosure will be clearly and completely described below in conjunction with the embodiments of the present disclosure. Obviously, the described embodiments are only a part of the embodiments of the present disclosure, rather than all the embodiments.

A general CDMA technology is a mobile communication standard, which is mainly applied in a field of an industrial module for data transmission. It uses code sequence correlation to achieve multiple access communication, and a transmitted carrier is modulated by both a baseband digital signal and an address code. The division is implemented and identified according to different code pattern structures, and a pseudo-random code is generally selected as the address code. The general CDMA technology is a wireless spread-spectrum communication technology that appears in a digital mobile communication process, and it has characteristics of high spectrum utilization rate, high voice quality, high confidentiality, low call drop rate, low electromagnetic radiation, high capacity, wide coverage and the like.

An embodiment provides a CDMA security encoding system, the CDMA security coding system including a baseband signal generating device, a baseband encoding device, and a CDMA encoding device.

Wherein the baseband signal generating device includes a D/A conversion unit, a differential bi-phase encoding unit, a conditioning and amplifying unit, a coupling unit, a re-collecting unit, a processing unit, a comparison unit, a control unit, a data monitoring unit, a display unit and an isolated sampling unit.

Wherein an input terminal of the D/A conversion unit receives a first clock signal, an output terminal of the D/A conversion unit communicates with an input terminal of the conditioning and amplifying unit, and an output terminal of the conditioning and amplifying unit communicates with an input terminal of the coupling unit.

An input terminal of the differential bi-phase encoding unit receives a data signal and a second clock signal, and an output terminal of the differential bi-phase encoding unit communicates with the input terminal of the coupling unit.

An output terminal of the coupling unit is configured to output a baseband signal.

An input terminal of the data monitoring unit receives an output signal of the differential bi-phase encoding unit, and performs short-circuit protection on output signals of the differential bi-phase encoding unit and the D/A conversion unit, and an output terminal of the data monitoring unit sends monitoring information to the display unit.

An input terminal of the re-collecting unit receives the output signal of differential bi-phase encoding unit, an output terminal of the re-collecting unit communicates with an input terminal of the processing unit, an output terminal of the processing unit communicates with an input terminal of the comparison unit, an output terminal of the comparison unit communicates with an input terminal of the control unit and the input terminal of the differential bi-phase encoding unit, and an output terminal of the control unit communicates with the input terminal of the differential bi-phase encoding unit.

The isolated sampling unit communicates with the output terminal of the coupling unit, the isolated sampling unit includes a parallel step-down transformer and a series current transformer, the parallel step-down transformer performs voltage isolated sampling on a baseband signal output by the coupling unit, and the series current transformer performs current isolated sampling on the baseband signal output by the coupling unit.

The baseband encoding device includes a disturbance unit, a data conversion unit, a scrambling unit, and a calculation unit; an input terminal of the disturbance unit receives the baseband signal, an output terminal of the disturbance unit communicates with an input terminal of the data conversion unit, an output terminal of the data conversion unit communicates with the input terminal of the scrambling unit, the output terminal of the scrambling unit communicates with an input terminal of the calculation unit, and an output terminal of the calculation unit is configured to output an encoded baseband signal.

The CDMA encoding device includes a decoding unit, a differential modulation unit, a spread-spectrum modulation unit, a carrier modulation unit, a signal amplification and filtering unit, and a phase-locked loop unit.

Wherein the decoding unit includes a differential bi-phase decoding unit and a Barker decoding unit;
The spread-spectrum modulation unit includes a spread-spectrum code trigger module and a CDMA modulation module;
The carrier modulation unit includes a carrier signal source and a BPSK modulation module; and
The signal amplification and filtering unit includes a power amplifier and a filter.

A first input terminal of the differential bi-phase decoding unit receives the encoded baseband signal, an output terminal of the differential bi-phase decoding unit communicates with a first input terminal of the Barker decoding unit, an output terminal of the Barker decoding unit communicates with a first input terminal of the differential modulation unit, an output terminal of the differential modulation unit communicates with a first input terminal of the CDMA modulation module, a first input terminal of the spread-spectrum code trigger module is configured to set a spread-spectrum code, and an output terminal of the spread-spectrum code trigger module communicates with a second input terminal of the CDMA modulation module.

An output terminal of the CDMA modulation module communicates with a first input terminal of the BPSK modulation module, an output terminal of a carrier signal communicates with a second input terminal of the BPSK modulation module, and an output terminal of the BPSK modulation module is connected to an input terminal of a power amplifier, an output terminal of the power amplifier is connected with an input terminal of the filter, and an output terminal of the filter outputs the CDMA encoded signal.

An input terminal of the phase-locked loop unit receives the encoded baseband signal, and the phase-locked loop unit has a plurality of output terminals; a first output terminal of the phase-locked loop unit communicates with a second input terminal of the differential bi-phase decoding unit, a second output terminal communicates with a second input terminal of the Barker decoding unit, a third output terminal of the phase-locked loop unit communicates with a second output terminal of the differential modulation unit and a second output terminal of the spread-spectrum code trigger module, and a fourth output terminal of the phase-locked loop unit communicates with a third input terminal of the spread-spectrum code trigger module.

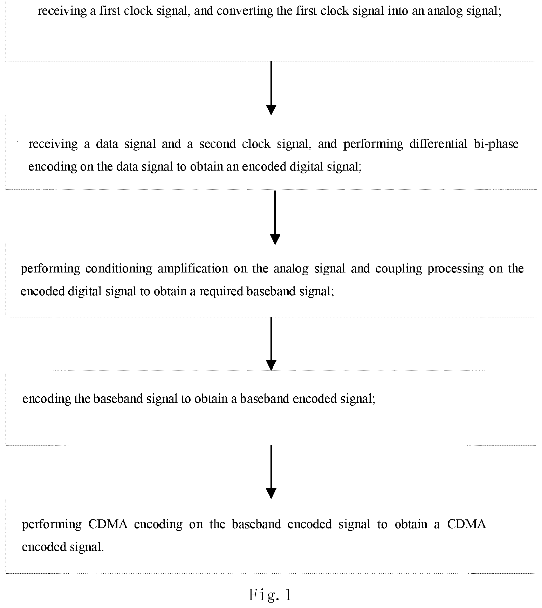

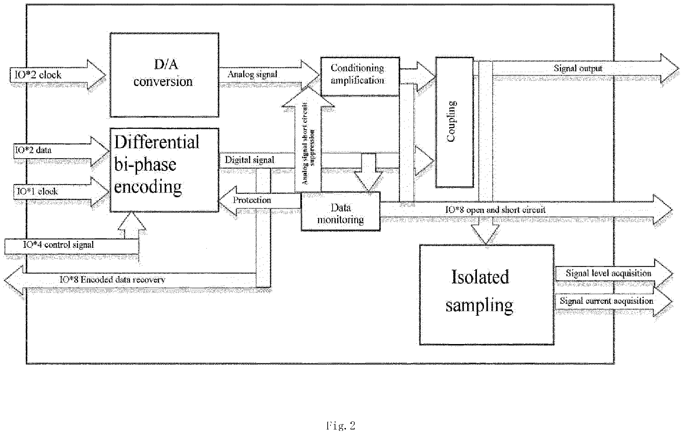

As shown in FIG. 1, there is provided a method for performing CDMA encoding using the CDMA security encoding system, which is specifically described as follows:
S1: the baseband signal generating device receives a digital signal to generate a baseband signal, as shown in FIG. 2, specifically:
The D/A conversion unit receives the first clock signal, the first clock signal exemplarily comes from a Field Programmable Gate Array (FPGA) module, the FPGA module is preferably placed in a functional module with double 2-out-of-2 comparison and security self-checking, and the D/A conversion unit converts the first clock signal to obtain the analog signal, and outputs the analog signal; the figured show that there are two first clock signals, the D/A conversion unit receives the two first clock signals, the D/A conversion module generates analog signals from the two received first clock signals by a digital counter, and specifically, the digital counter uses one of the first clock signals as a data signal, and the other first clock signal as a counting clock, and the digital counter performs mixed accumulation at an output terminal, and then generates the analog signals through operation-amplification processing; and the analog signals are transmitted to the coupling unit after undergoing a series of conditioning processing of the operation and amplification and push-pull of the conditioning and amplifying unit.

The differential bi-phase encoding unit receives the data signal and the second clock signal, the data signal exemplarily comes from a CPU unit, the CPU unit is preferably placed in the functional module with double 2-out-of-2 comparison and security self-checking, the second clock signal comes from the FPGA module as well, the differential bi-phase encoding is performed on the data signal to obtain the encoded digital signal, and the encoded digital signal is output; the drawings show that the differential bi-phase encoding unit receives four data signals for differential bi-phase encoding, and specifically, a JK flip-flop is configured to carry out differential bi-phase hardware encoding on the four data signals by twice the frequency of the data rate to obtain encoded digital signals and the encoded digital signals are transmitted to the coupling unit.

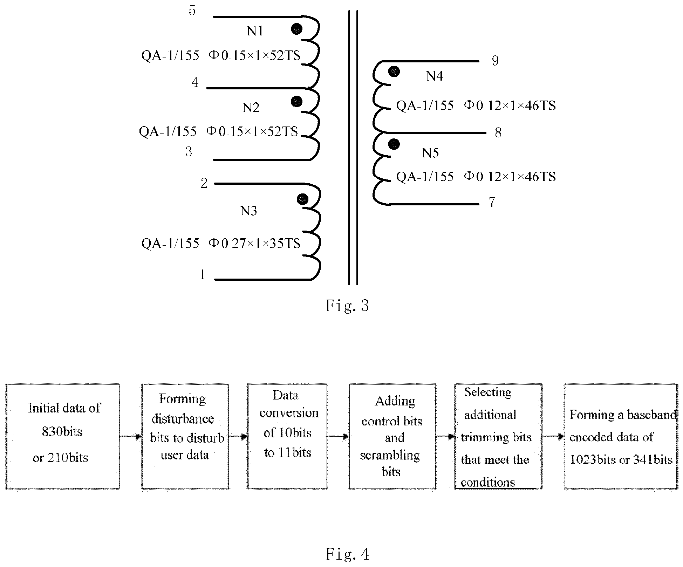

The coupling unit receives an analog signal and an encoded digital signal, and performs coupling processing on the analog signal and the encoded digital signal to obtain a baseband signal, and specifically, two-in-one mixing and superposition are performed on the analog signal and the encoded digital signal by a synthetic transformer with a specific transformation ratio. Exemplarily, as shown in FIG. 3, a first primary coil (input terminals 1 and 2) input analog signals, a second primary coil (input terminals 3 and 5) input encoded digital signals, and a secondary coil (output terminals 7 and 9) outputs mixed and superimposed baseband signals, wherein the turns ratio of the first primary coil to the secondary coil is 35/92, and the turns ratio of the second primary coil to the secondary coil is 104/92 (that is, 26/23), and then the need of aliasing output of the signal amplitude of 14-18V and the signal amplitude of 20-23V is met, thereby generating a baseband signal complying with the European standard regulation, and exemplarily, bits of a baseband signal are 830 bits or 210 bits.

As a preferred embodiment, an embodiment further uses the data monitoring unit to receive the encoded digital signal, and monitor the encoded digital signal, and the output of the analog signal and the encoded digital signal is cut off if a monitoring result shows that the encoded digital signal is a short-circuit signal, and specifically: the data monitoring unit monitors the encoded digital signal in manner of comparing the encoded digital signal with a preset threshold value, and if the encoded digital signal is greater than a preset threshold value, it indicates that the encoded digital signal is a short-circuit signal, at which time the data monitoring unit sends an alert message to the D/A conversion unit and the differential bi-phase encoding unit to facilitate the D/A conversion unit and the differential bi-phase encoding unit to cut off the output of the analog signal and the encoded digital signal, so as to implement the protection of the output signals of the differential bi-phase encoding unit and the D/A conversion unit, thereby guaranteeing security of an output signal of the coupling unit.

Also, the display unit receives the monitoring results of the data monitoring unit (FIG. 2 shows that 8 monitoring results are received), and if a monitoring result shows that the encoded digital signal is a short-circuit signal, the display unit correspondingly displays a short-circuit state; and if a monitoring result shows that the encoded digital signal is an open-circuit signal, the display unit correspondingly displays an open-circuit state, and thus, it is convenient for an external staff to observe internal open and short-circuit states.

Further, as a preferred embodiment, an embodiment further uses the re-collecting unit to re-collect the encoded digital signal. Specifically, the re-collecting unit re-collects 8 encoded digital signals, the re-collecting unit transmits the 8 encoded digital signals to the processing unit, the processing unit receives and decodes the re-collected encoded digital signals to obtain decoded digital signals, and the decoded digital signals are transmitted to the comparison unit, the comparison unit compares the decoded digital signals with a data signal, if the decoded digital signals are consistent with the data signal, the encoded digital signals are output directly through the differential bi-phase encoding unit, and if the decoded digital signals are inconsistent with the data signal, the encoded digital signals are cut off under control of the control unit, and specifically, the control unit transmits four control signals to the differential bi-phase encoding unit, and the output of the encoded digital signals is cut off after the differential bi-phase encoding unit receives the control signals, further guaranteeing accuracy of the output signal of the coupling unit.

Further, as a preferred embodiment, an embodiment further uses the isolated sampling unit to perform isolated sampling of the baseband signal, and specifically, the isolated sampling unit is configured to perform voltage isolated sampling on the baseband signal of the coupling module through the parallel step-down transformer, and current isolated sampling through the series current transformer respectively, and abnormal output of baseband data is detected, thus guaranteeing effective output of data of the coupling unit.

S2: the baseband encoding unit encodes the baseband signal to obtain an encoded baseband signal; specifically:
The disturbance unit receives the baseband signal (exemplary user data of 830bits or 210bits as shown in FIG. 4) and performs disturbance processing to obtain disturbed data and sends it to the data conversion unit; specifically, a 32-bit linear feedback shift register of a characteristic polynomial h (x) =x³²+x³¹+x³⁰+x²⁹+x²⁷+x²⁵+...+1 is used to perform disturbance processing on the user data of 830bits or 210bits, where the initial value S of the characteristic polynomial is equal to (2801775573·B)mod2³², and B is decimal representation of selected 12 disturbance bits.

The data conversion unit receives the disturbed data and performs data conversion to obtain converted data, and sends it to the scrambling unit. Exemplarily, the disturbed data is converted from 10bits to 11bits to obtain converted data of 913bits or 23 1bits; specifically, the disturbed data is grouped in the order of output by a codeword per 10bits, and then a pre-defined conversion table of 10bits to 11bits is used to perform data conversion on each codeword of 10bits from 10bits to 11bits. A conversion method is described as follows: a binary codeword of 10bits is represented by decimal x, then an x^{th} 11bits data block is found out from the defined conversion table, and the 11bits data block is then a codeword of 11bits that is obtained after the conversion of the 10 bits codeword.

The scrambling unit receives the converted data, and adds control bits and disturbance bits to the converted data to obtain scrambled data and sends it to the calculation unit. Exemplarily, the control bits are 3bits and the disturbance bits are 12bits.

The calculation unit receives the scrambled data, selects additional trimming bits that meet the conditions, calculates check bits, and then adds the additional trimming bits and the check bits to the scrambled data to obtain an encoded baseband signal with specific bits, and exemplarily, the additional trimming bits are 10bits, the check bits are 85bits, and the bits of the encoded baseband signal are 1023bits or 341bits.

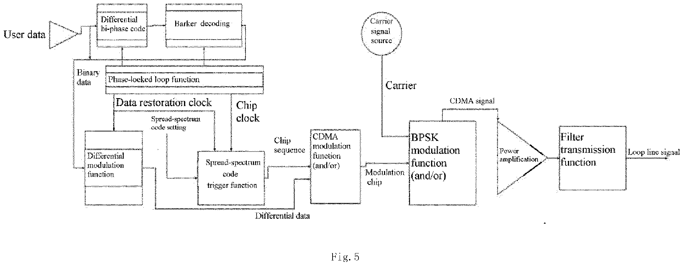

S3: the CDMA encoding device performs CDMA encoding on the encoded baseband signal to obtain a CDMA encoded signal, as shown in FIG. 5, which includes:
S3-1: decoding the encoded baseband signal (that is, the user data in FIG. 5) to obtain the baseband decoded signal, specifically as follows:
The first input terminal of the differential bi-phase decoding unit receives the encoded baseband signal, performs differential bi-phase decoding on the encoded baseband signal to obtain the initial decoded signal, and exemplarily, the differential bi-phase decoding unit performs Differential Bi-Phase Level (DBPL) decoding on the encoded baseband signal to obtain the initial decoded signal.

The first input terminal of the Barker decoding unit receives the initial decoded signal, and performs Barker decoding on the initial decoded signal to obtain a baseband decoded signal (indicated as binary data in FIG. 5), and exemplarily, the Barker decoding unit converts the initial decoded signal into a Barker code 11100010010 of a 11-bit chip, then the Barker code 11100010010 of the 11-bit chip is demodulated to logic 1, and an inverse code of the Barker code of the 11-bit chip is demodulated to logic 0 to obtain a baseband decoded signal.

S3-2: modulation is performed on the baseband decoded signal, the modulation including differential modulation, spread-spectrum modulation and carrier modulation sequentially, and finally the carrier frequency signal is acquired, which is specifically described as follows:
S3-2-1: the first input terminal of the differential modulation unit receives the encoded baseband signal and performs differential modulation on the baseband decoded signal to obtain a differential modulated signal, and specifically, the differential modulation unit performs DBPL modulation on the baseband decoded signal to obtain the differential modulated signal (FIG. 5 shows differential data) and sends it to the CDMA modulation module.
S3-2-2: the spread-spectrum modulation unit performs spread-spectrum modulation on the differential modulated signal to obtain a spread-spectrum modulated signal, specifically:
   The spread-spectrum code trigger module is configured to generate an address code for CDMA spread-spectrum modulation, and then the address code (that is, a chip sequence in FIG. 5) is sent to the CDMA modulation module. Exemplarily, the bits of the address code are 472bits.

The first input terminal of the CDMA modulation module receives the differential modulated signal, and its second input terminal receives the address code, and direct sequence spread-spectrum modulation is performed on the differential modulation signal and the address code to obtain a spread-spectrum modulated signal (that is, a modulation chip in FIG. 5), and the spread-spectrum modulated signal is transmitted to the BPSK modulation module.

S3-2-3: the carrier modulation unit performs carrier modulation on the spread-spectrum modulated signal to obtain a carrier frequency signal; specifically:
The carrier signal source generates a carrier for carrier modulation, and the carrier is sent to the BPSK modulation module.

The BPSK modulation module receives the carrier and the spread-spectrum modulated signal for carrier modulation, so that the spread-spectrum modulated signal is spread by N times to obtain a carrier frequency signal (that is, the CDMA signal in FIG. 5). Preferably, the BPSK modulation module uses the carrier to spread the spread-spectrum modulated signal by 3 times to generate a carrier frequency signal of 13.545 MHz.

S3-3: the signal amplification and filtering unit performs amplification and filtering processing on the carrier frequency signal, specifically,
The power amplifier performs amplification processing on the carrier frequency signal without power distortion, and then transmits an amplified signal to the filter, and the filter receives the amplified signal for filtering processing to guarantee the transmission quality of the carrier frequency signal, that is, the bit error rate is less than 10⁻⁵, undesired amplitude modulation is not greater than 7%, etc., and finally the CDMA encoded signal is obtained, that is, the CDMA encoded signal (that is, a loop line signal in FIG. 5) that conforms to the system of a signal that is received by the loop line transmission module of the European train operation control system.

As a preferred embodiment, this embodiment further uses the phase-locked loop unit to guarantee the synchronization of encoded baseband signal processing, specifically, the input terminal of the phase-locked loop unit is configured to receive the encoded baseband signal.

Then the first output terminal of the phase-locked loop unit outputs a signal to the second input terminal of the differential bi-phase decoding unit, the second output terminal of the phase-locked loop unit outputs a signal to the second input terminal of the Barker decoding unit, the third output terminal of the phase-locked loop unit outputs a signal to the second output terminal of the differential modulation unit and the second output terminal of the spread-spectrum code trigger module, and the fourth output terminal of the phase-locked loop unit outputs a signal to the third input terminal of the spread-spectrum code trigger module, thereby controlling the phase and frequency in the related signal processing processes of the differential bi-phase decoding unit, the Barker decoding unit, the differential modulation unit and the spread-spectrum code trigger module to kept synchronized with those of the input encoded baseband signal.

Corresponding to the CDMA encoding method, this embodiment further provides a CDMA decoding system and decoding method. A decoded spread-spectrum code is transmitted to the loop line transmission module through an air interface in a signal system different from FSK through an European standard transponder of a signal device, and the loop line transmission module performs CDMA decoding with the decoded spread-spectrum code, and exemplarily, the European standard transponder used in this embodiment is a downsized European standard transponder that complies with ss-036.

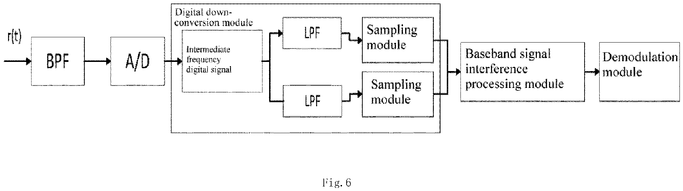

Specifically, as shown in FIG. 6, the CDMA decoding unit includes a Band-Pass Filter (BPF), an A/D module, a digital down-conversion module, a baseband signal interference processing module, and a demodulation module, the digital down-conversion module including a Low-Pass Filter (LPF) and a sampling module.

The CDMA decoding method specifically includes:
Receiving the CDMA encoded signal (that is, r(t) in FIG. 6) by the band-pass filter, performing out-of-band noise and interference signal suppression on the CDMA encoded signal, and then transmitting the filtered signal to the A/D module.

The A/D module realizes mid-band pass sampling, acquires the intermediate frequency digital signal and transmits it to the digital down-conversion module; wherein, the A/D module uses a 108.38 MHz crystal for sampling, with a bit width of 14bits, and the sampling rate is 8 times that of the CDMA carrier signal, which can adapt to signal scenarios with large DC offset and high dynamic range.

The digital down-conversion module receives the intermediate frequency digital signal and down-converts the intermediate frequency signal to the baseband signal, that is, the carrier frequency of the intermediate frequency signal is removed to be restored into the CDMA encoded baseband signal. In order to better suppress a burst interference signal, interference processing is performed on the intermediate frequency digital signal to reduce carrier synchronization and code capture errors. The interference processing of the intermediate frequency signal is realized in the digital down-conversion module, specifically the intermediate frequency digital signal is made to pass through the low-pass filter, and the low-pass filter has a flat passband characteristic and a group delay characteristic, so that a target signal can pass through the low-pass filter without distortion, and meanwhile, it has a very steep transition band, so that very good adjacent channel suppression capability can be provided. The typical adjacent channel suppression capability range of the low-pass filter is 30-90dB, and the intermediate frequency digital signal suppressed by the low-pass filter is sampled by the sampling module to be restored to the CDMA encoded baseband signal.

And as a backup shown in the drawings, this embodiment divides the intermediate frequency digital signal into two channels for interference processing, that is, the interference processing of the intermediate frequency signal is realized through a channel I and a channel Q respectively, so as to avoid that when one of the channels fails, the other channel can perform interference processing operation of the intermediate frequency signal normally. The baseband signal interference processing module eliminates possible adjacent channel interference and single-tone interference signals and the like of the European loop line from the CDMA encoded baseband signal to filter out a down-converted folding frequency component.

The demodulation module restores the CDMA encoded baseband signal according to the known address spread-spectrum code number to obtain the CDMA decoded signal, and the drawings show use of a BPSK demodulation mode.

The above embodiments are only used to illustrate rather than limit the technical solutions of the present disclosure. Although the present disclosure has been described in detail with reference to the above embodiments, its scope is defined only by the appended claims.

## Claims

1. A CDMA security encoding method, comprising steps of:
receiving a first clock signal, and converting the first clock signal into an analog signal;
receiving a data signal and a second clock signal, and performing differential bi-phase encoding on the data signal to obtain an encoded digital signal;
after conditioning and amplifying the analog signal, coupling the analog signal with the encoded digital signal, to obtain a desired baseband signal, wherein two-in-one mixing and superposition are is performed on the analog signal and the encoded digital signal by a synthetic transformer with a specific transformation ratio;
encoding the baseband signal to obtain an encoded baseband signal, wherein a disturbance unit receives the baseband signal and performs disturbance processing to obtain disturbed data and sends it to a data conversion unit, the data conversion unit receives the disturbed data and performs data conversion to obtain converted data, and sends it to a scrambling unit, the scrambling unit receives the converted data, and adds control bits and disturbance bits to the converted data, so as to obtain scrambled data, and sends the scrambled data to a calculation unit; the calculation unit receives the scrambled data, selects additional trimming bits that meet specific conditions, calculates check bits, and then adds the additional trimming bits and the check bits to the scrambled data to obtain an encoded baseband signal with specific bits;
and
performing CDMA encoding on the encoded baseband signal to obtain an encoded CDMA signal.

2. The CDMA security encoding method according to claim 1, further comprising steps of:
re-collecting the encoded digital signal;
decoding the re-collected encoded digital signal to obtain a decoded digital signal;
comparing the decoded digital signal with the data signal, and cutting off output of the encoded digital signal if the decoded digital signal is inconsistent with the data signal; and
outputting the encoded digital signal if the decoded digital signal is consistent with the data signal.

3. The CDMA security encoding method according to claim 1, before receiving the analog signal and the encoded digital signal and performing coupling processing on the analog signal and the encoded digital signal, further comprising steps of:
receiving the encoded digital signal, monitoring the encoded digital signal, and cutting off the output of the analog signal and the encoded digital signal if a monitoring result shows that the encoded digital signal is a short-circuit signal.

4. The CDMA security encoding method according to claim 1, wherein the performing CDMA encoding on the encoded baseband signal to obtain a CDMA coded signal specifically comprises steps of:
sequentially performing differential bi-phase decoding and Barker decoding on the encoded baseband signal to obtain a baseband decoded signal;
performing differential modulation on the baseband decoded signal to obtain a differential modulated signal;
generating an address code for spread-spectrum modulation, and performing direct sequence spread-spectrum modulation on the differential modulated signal and the address code to obtain a spread-spectrum modulated signal;
generating a carrier for carrier modulation, and performing carrier modulation on the spread-spectrum modulated signal and the carrier, so that the spread-spectrum modulated signal is spread by N times, to obtain a carrier frequency signal; and
performing power amplification and filtering processing on the carrier frequency signal to obtain a CDMA encoded signal.

5. The CDMA security encoding method according to claim 4, further comprising:
receiving, by a phase-locked loop, the encoded baseband signal; and
controlling, by the phase-locked loop, the frequency and phase in the processes of the differential bi-phase decoding, Barker decoding, differential modulation and address code generation according to the encoded baseband signal to be synchronized with those of the encoded baseband signal.

6. A CDMA security encoding system, comprising a baseband signal generating device, a baseband encoding device and a CDMA encoding device; wherein the baseband signal generating device comprises a D/A conversion unit, a differential bi-phase encoding unit, a conditioning and amplifying unit and a coupling unit;
the D/A conversion unit is configured to receive the first clock signal, and convert the first clock signal to obtain an analog signal;
the differential bi-phase encoding unit is configured to receive the data signal and the second clock signal, and perform differential bi-phase encoding on the data signal to obtain an encoded digital signal;
the conditioning and amplifying unit is configured to perform conditioning and amplifying on the analog signal to obtain a conditioned amplified analog signal;
the coupling unit is configured to perform coupling processing on the conditioned and amplified analog signal and the encoded digital signal to obtain a desired baseband signal, wherein two-in-one mixing and superposition are performed on the analog signal and the encoded digital signal by a synthetic transformer with a specific transformation ratio;
the baseband encoding device is configured to encode the baseband signal to obtain an encoded baseband signal, including a disturbance unit, a data conversion unit, a scrambling unit and a calculation unit, wherein the disturbance unit is configured to receive the baseband signal and performs disturbance processing to obtain disturbed data and send it to the data conversion unit, the data conversion unit is configured to receive the disturbed data and perform data conversion to obtain converted data, and send it to the scrambling unit, the scrambling unit is configured to receive the converted data, and add control bits and disturbance bits to the converted data, so as to obtain scrambled data, and send the scrambled data to the calculation unit; the calculation unit is configured to receive the scrambled data, select additional trimming bits that meet specific conditions, calculate check bits, and then add the additional trimming bits and the check bits to the scrambled data to obtain an encoded baseband signal with specific bits; and
the CDMA encoding device is configured to perform CDMA encoding on the baseband encoded signal to obtain a CDMA encoded signal.

7. The CDMA security encoding system according to claim 6, wherein the baseband signal generating device further comprises a re-collecting unit, a processing unit, a comparison unit, and a control unit;
the re-collecting unit is configured to re-collect an encoded digital signal;
the processing unit is configured to decode the re-collected encoded digital signal to obtain a decoded digital signal;
the comparison unit is configured to compare the decoded digital signal with the data signal, and the output of the encoded digital signal is cut off under control of the control unit if the decoded digital signal is inconsistent with the data signal; and
the encoded digital signal is output through the differential bi-phase encoding unit if the decoded digital signal is consistent with the data signal.

8. The CDMA security encoding system according to claim 6, wherein the baseband signal generating device further comprises a data monitoring unit; and before the coupling unit performs coupling processing on the conditioned amplified analog signal and the encoded digital signal to obtain a baseband signal,
the data monitoring unit receives the encoded digital signal, and monitors the encoded digital signal, and output of the analog signal and the encoded digital signal is cut off if a monitoring result shows that the encoded digital signal is a short-circuit signal.

9. The CDMA security encoding system according to claim 6, wherein the CDMA encoding device comprises a differential bi-phase decoding unit, a Barker decoding unit, a differential modulation unit, a spread-spectrum modulation unit, a carrier modulation unit, and a signal amplification and filtering unit;
the spread-spectrum modulation unit comprises a spread-spectrum code trigger module and a CDMA modulation module;
the carrier modulation unit comprises a carrier signal source and a BPSK modulation module;
the differential bi-phase decoding unit performs differential bi-phase decoding on the encoded baseband signal to obtain an initial decoded signal;
the Barker decoding unit is configured to perform Barker decoding on the initial decoded signal to obtain a baseband decoded signal;
the differential modulation unit is configured to perform differential modulation on the baseband decoded signal to obtain a differential modulated signal;
the spread-spectrum code trigger module is configured to generate an address code for spread-spectrum modulation;
the CDMA modulation module is configured to perform direct sequence spread-spectrum modulation on the differential modulated signal and the address code to obtain a spread-spectrum modulated signal;
the carrier signal source is configured to generate a carrier for carrier modulation;
the BPSK modulation module is configured to perform carrier modulation on the spread-spectrum modulated signal and the carrier, so that the spread-spectrum modulated signal is spread by N times, to obtain a carrier frequency signal; and
the signal amplification and filtering unit is configured to amplify and filter the carrier frequency signal to obtain a CDMA encoded signal.

10. The CDMA security encoding system according to claim 9, wherein the CDMA encoding unit further comprises a phase-locked loop unit;
the phase-locked loop unit is configured to receive the encoded baseband signal, and control the frequency and phase in the processes of the differential bi-phase decoding, Barker decoding, differential modulation, and address code generation according to the encoded baseband signal to be synchronized with those of the encoded baseband signal.

11. CDMA security encoding and decoding method comprising the CDMA security encoding method of claim 1, comprising steps of:
receiving, by a band-pass filter, the CDMA encoded signal, and performing filtering processing on the CDMA encoded signal to obtain a filtered signal;
receiving, by an A/D module, the filtered signal, and performing mid-band pass sampling on the filtered signal to obtain an intermediate frequency digital signal;
receiving, by a digital down-conversion module, the intermediate frequency digital signal, down-converting the intermediate frequency signal to a baseband signal, and performing interference processing on the intermediate frequency signal to obtain a CDMA encoded baseband signal;
receiving, by a baseband signal interference processing module, the CDMA encoded baseband signal, and eliminating an adjacent channel and a single-tone interference signal in the CDMA encoded baseband signal to obtain a processed CDMA encoded baseband signal; and
receiving, by a demodulation module, the processed CDMA encoded baseband signal, and restoring the processed CDMA encoded baseband signal according to a known address spread-spectrum code number to obtain a CDMA decoded signal.

12. CDMA security encoding and decoding system comprising the CDMA security encoding system of claim 6, further comprising a band-pass filter, an A/D module, a digital down-conversion module, a baseband signal interference processing module, and a demodulation module, and a digital down-conversion module; wherein
the band-pass filter is configured to receive the CDMA encoded signal, and suppress out-of-band noise and an interference signal in the CDMA encoded signal, to obtain a filtered signal;
the A/D module is configured to receive the filtered signal, and perform mid-band pass sampling on the filtered signal to obtain an intermediate frequency digital signal;
the digital down-conversion module is configured to receive the intermediate frequency digital signal, down-convert the intermediate frequency signal to a baseband signal, and perform interference processing on the intermediate frequency signal to obtain a CDMA encoded baseband signal;
the baseband signal interference processing module is configured to receive the CDMA encoded baseband signal, and eliminate an adjacent channel and a single-tone interference signal to obtain a processed CDMA encoded baseband signal; and
the demodulation module is configured to receive the processed CDMA encoded baseband signal, and restore the processed CDMA encoded baseband signal according to the known address spread-spectrum code number to obtain a CDMA decoded signal.

## Patentansprüche

1. CDMA-Sicherheitscodierungsverfahren, umfassend die Schritte:
Empfangen eines ersten Taktsignals und Umwandeln des ersten Taktsignals in ein analoges Signal;
Empfangen eines Datensignals und eines zweiten Taktsignals, und Durchführen einer differenziellen Bi-Phasencodierung an dem Datensignal, um ein codiertes digitales Signal zu erhalten;
nach dem Aufbereiten und Verstärken des analogen Signals, Koppeln des analogen Signals mit dem codierten digitalen Signal, um ein gewünschtes Basisbandsignal zu erhalten, wobei eine Zweiin-Eins-Mischung und Überlagerung des analogen Signals und des codierten digitalen Signals durch einen synthetischen Transformator mit einem spezifischen Transformationsverhältnis durchgeführt wird;
Codieren des Basisbandsignals, um ein codiertes Basisbandsignal zu erhalten, wobei eine Störeinheit das Basisbandsignal empfängt und eine Störungsverarbeitung durchführt, um gestörte Daten zu erhalten, und sie an eine Datenumwandlungseinheit sendet, die Datenumwandlungseinheit die gestörten Daten empfängt und eine Datenumwandlung durchführt, um umgewandelte Daten zu erhalten, und sie an eine Verwürfelungseinheit sendet, die Verwürfelungseinheit die umgewandelten Daten empfängt und Steuerbits und Störungsbits zu den umgewandelten Daten addiert, um verwürfelte Daten zu erhalten, und die verwürfelten Daten an eine Berechnungseinheit sendet; die Berechnungseinheit die verwürfelten Daten empfängt, zusätzliche Trimm-Bits auswählt, die bestimmte Bedingungen erfüllen, Prüfbits berechnet und dann die zusätzlichen Trimm-Bits und die Prüfbits zu den verwürfelten Daten addiert, um ein codiertes Basisbandsignal mit bestimmten Bits zu erhalten;
und
Durchführen einer CDMA-Codierung auf dem codierten Basisbandsignal, um ein codiertes CDMA-Signal zu erhalten.

2. CDMA-Sicherheitscodierungsverfahren nach Anspruch 1, ferner umfassend die folgenden Schritte:
Wiedereinsammeln des codierten digitalen Signals;
Decodieren des wiedergesammelten codierten digitalen Signals, um ein decodiertes digitales Signal zu erhalten;
Vergleichen des decodierten digitalen Signals mit dem Datensignal und Unterbrechen der Ausgabe des codierten digitalen Signals, wenn das decodierte digitale Signal mit dem Datensignal nicht konsistent ist; und
Ausgabe des codierten Digitalsignals, wenn das decodierte Digitalsignal mit dem Datensignal konsistent ist.

3. CDMA-Sicherheitscodierungsverfahren nach Anspruch 1, das vor dem Empfangen des analogen Signals und des codierten digitalen Signals und dem Durchführen der Kopplungsverarbeitung des analogen Signals und des codierten digitalen Signals die folgenden Schritte umfasst:
Empfangen des codierten digitalen Signals, Überwachen des codierten digitalen Signals und Abschalten des Ausgangs des analogen Signals und des codierten digitalen Signals, wenn ein Überwachungsergebnis zeigt, dass das codierte digitale Signal ein Kurzschlusssignal ist.

4. CDMA-Sicherheitscodierungsverfahren nach Anspruch 1, wobei das Durchführen der CDMA-Codierung des codierten Basisbandsignals zum Erhalt eines CDMA-codierten Signals insbesondere die folgenden Schritte umfasst:
sequentielles Durchführen einer differentiellen Zweiphasen-Decodierung und einer Barker-Decodierung an dem codierten Basisbandsignal, um ein decodiertes Basisbandsignal zu erhalten;
Durchführen einer Differenzmodulation auf dem Basisbanddecodierten Signal, um ein differenziell moduliertes Signal zu erhalten;
Erzeugen eines Adresscodes für die Spreizspektrummodulation, und Durchführen einer Direktsequenz-Spreizspektrummodulation an dem differenziell modulierten Signal und dem Adresscode, um ein spreizspektrummoduliertes Signal zu erhalten;
Erzeugen eines Trägers zur Trägermodulation und Durchführen einer Trägermodulation an dem spreizspektrummodulierten Signal und dem Träger, sodass das spreizspektrummodulierte Signal um das N-fache gespreizt wird, um ein Trägerfrequenzsignal zu erhalten; und
Durchführen von Leistungsverstärkung und Filterung des Trägerfrequenzsignals, um ein CDMA-codiertes Signal zu erhalten.

5. CDMA-Sicherheitscodierungsverfahren nach Anspruch 4, das ferner Folgendes umfasst:
Empfangen des codierten Basisbandsignals durch eine phasenstarre Schleife; und
Steuern der Frequenz und der Phase in den Prozessen der differentiellen Zweiphasen-Decodierung, der Barker-Decodierung, der differentiellen Modulation und der Adresscode-Erzeugung entsprechend dem codierten Basisbandsignal durch den Phasenregelkreis, um sie mit denen des codierten Basisbandsignals zu synchronisieren.

6. CDMA-Sicherheitscodierungssystem, das eine Basisbandsignalerzeugungsvorrichtung, eine Basisbandcodierungsvorrichtung und eine CDMA-Codierungsvorrichtung umfasst; wobei die Basisbandsignalerzeugungsvorrichtung eine D/A-Wandlereinheit, eine differentielle Zweiphasen-Codierungseinheit, eine Aufbereitungs- und Verstärkungseinheit und eine Kopplungseinheit umfasst;
wobei die D/A-Wandlereinheit so konfiguriert ist, dass sie das erste Taktsignal empfängt und das erste Taktsignal umwandelt, um ein analoges Signal zu erhalten;
wobei die differentielle Zweiphasen-Codierungseinheit so konfiguriert ist, dass sie das Datensignal und das zweite Taktsignal empfängt und eine differentielle Zweiphasen-Codierung an dem Datensignal durchführt, um ein codiertes digitales Signal zu erhalten;
wobei die Konditionierungs- und Verstärkungseinheit so konfiguriert ist, dass sie eine Konditionierung und Verstärkung des Analogsignals durchführt, um ein konditioniertes verstärktes Analogsignal zu erhalten;
wobei die Kopplungseinheit so konfiguriert ist, dass sie eine Kopplungsverarbeitung des konditionierten und verstärkten analogen Signals und des codierten digitalen Signals durchführt, um ein gewünschtes Basisbandsignal zu erhalten, wobei eine Zweiin-Eins-Mischung und Überlagerung des analogen Signals und des codierten digitalen Signals durch einen synthetischen Transformator mit einem spezifischen Transformationsverhältnis durchgeführt wird;
die Basisband-Codierungsvorrichtung so konfiguriert ist, dass sie das Basisbandsignal codiert, um ein codiertes Basisbandsignal zu erhalten, und eine Störeinheit, eine Datenumwandlungseinheit, eine Verschlüsselungseinheit und eine Berechnungseinheit enthält, wobei die Störeinheit so konfiguriert ist, dass sie das Basisbandsignal empfängt und eine Störungsverarbeitung durchführt, um gestörte Daten zu erhalten und sie an die Datenumwandlungseinheit zu senden, die Datenumwandlungseinheit so konfiguriert ist, dass sie die gestörten Daten empfängt und eine Datenumwandlung durchführt, um umgewandelte Daten zu erhalten, und diese an die Verwürfelungseinheit sendet, die Verwürfelungseinheit so konfiguriert ist, dass sie die umgewandelten Daten empfängt und Steuerbits und Störungsbits zu den umgewandelten Daten hinzufügt, um verwürfelte Daten zu erhalten, und die verwürfelten Daten an die Berechnungseinheit sendet; die Berechnungseinheit so konfiguriert ist, dass sie die verwürfelten Daten empfängt, zusätzliche Trimm-Bits auswählt, die spezifische Bedingungen erfüllen, Prüfbits berechnet und dann die zusätzlichen Trimm-Bits und die Prüfbits zu den verwürfelten Daten addiert, um ein codiertes Basisbandsignal mit spezifischen Bits zu erhalten; und
wobei die CDMA-Codierungsvorrichtung so konfiguriert ist, dass sie eine CDMA-Codierung an dem codierten Basisbandsignal durchführt, um ein CDMA-codiertes Signal zu erhalten.

7. CDMA-Sicherheitscodierungssystem nach Anspruch 6, wobei die Basisbandsignal-Erzeugungsvorrichtung ferner eine Rekollektionseinheit, eine Verarbeitungseinheit, eine Vergleichseinheit und eine Steuereinheit umfasst;
wobei die Rekollektionseinheit dazu konfiguriert ist, ein codiertes digitales Signal erneut zu sammeln;
wobei die Verarbeitungseinheit so konfiguriert ist, dass sie das neu gesammelte codierte digitale Signal decodiert, um ein decodiertes digitales Signal zu erhalten;
wobei die Vergleichseinheit so konfiguriert ist, dass sie das decodierte digitale Signal mit dem Datensignal vergleicht, und die Ausgabe des codierten digitalen Signals unter Steuerung der Steuereinheit abgeschnitten wird, wenn das decodierte digitale Signal nicht mit dem Datensignal übereinstimmt; und
wobei das codierte digitale Signal über die differentielle Zweiphasen-Codierungseinheit ausgegeben wird, wenn das decodierte digitale Signal mit dem Datensignal übereinstimmt.

8. CDMA-Sicherheitscodierungssystem nach Anspruch 6, wobei die Basisbandsignal-Erzeugungsvorrichtung ferner eine Datenüberwachungseinheit umfasst; und bevor die Kopplungseinheit eine Kopplungsverarbeitung an dem konditionierten verstärkten Analogsignal und dem codierten Digitalsignal durchführt, um ein Basisbandsignal zu erhalten,
wobei die Datenüberwachungseinheit das codierte digitale Signal empfängt und das codierte digitale Signal überwacht und die Ausgabe des analogen Signals und des codierten digitalen Signals unterbrochen wird, wenn ein Überwachungsergebnis zeigt, dass das codierte digitale Signal ein Kurzschlusssignal ist.

9. CDMA-Sicherheitscodierungssystem nach Anspruch 6, wobei die CDMA-Codierungsvorrichtung eine differentielle Zweiphasen-Decodierungseinheit, eine Barker-Decodierungseinheit, eine differentielle Modulationseinheit, eine Spreizspektrummodulationseinheit, eine Trägermodulationseinheit und eine Signalverstärkungs- und -filterungseinheit umfasst;
die Spreizspektrummodulationseinheit ein Spreizspektrumscode-Triggermodul und ein CDMA-Modulationsmodul umfasst;
wobei die Trägermodulationseinheit eine Trägersignalquelle und ein BPSK-Modulationsmodul umfasst;
wobei die differentielle Zweiphasen-Decodierungseinheit eine differentielle Zweiphasen-Decodierung des codierten Basisbandsignals durchführt, um ein erstes decodiertes Signal zu erhalten;
wobei die Barker-Decodierungseinheit so konfiguriert ist, dass sie eine Barker-Decodierung an dem anfänglich decodierten Signal durchführt, um ein decodiertes Basisbandsignal zu erhalten;
wobei die Differenzmodulationseinheit so konfiguriert ist, dass sie eine Differenzmodulation an dem decodierten Basisbandsignal durchführt, um ein differenzmoduliertes Signal zu erhalten;
wobei das Spreizspektrumscode-Triggermodul so konfiguriert ist, dass es einen Adresscode für die Spreizspektrummodulation erzeugt;
wobei das CDMA-Modulationsmodul so konfiguriert ist, dass es eine Direktsequenz-Spreizspektrummodulation an dem differenziell modulierten Signal und dem Adresscode durchführt, um ein spreizspektrummoduliertes Signal zu erhalten;
wobei die Trägersignalquelle so konfiguriert ist, dass sie einen Träger für die Trägermodulation erzeugt;
wobei das BPSK-Modulationsmodul so konfiguriert ist, dass es eine Trägermodulation an dem spreizspektrummodulierten Signal und dem Träger durchführt, sodass das spreizspektrummodulierte Signal um das N-fache gespreizt wird, um ein Trägerfrequenzsignal zu erhalten; und
wobei die Signalverstärkungs- und -filterungseinheit so konfiguriert ist, dass sie das Trägerfrequenzsignal verstärkt und filtert, um ein CDMA-codiertes Signal zu erhalten.

10. CDMA-Sicherheitscodierungssystem nach Anspruch 9, wobei die CDMA-Codierungseinheit ferner eine Phasenregelkreiseinheit umfasst;
wobei die Phasenregelkreiseinheit so konfiguriert ist, dass sie das codierte Basisbandsignal empfängt und die Frequenz und Phase in den Prozessen der differentiellen Zweiphasen-Decodierung, der Barker-Decodierung, der differentiellen Modulation und der Adresscode-Erzeugung entsprechend dem codierten Basisbandsignal so steuert, dass sie mit denen des codierten Basisbandsignals synchronisiert sind.

11. CDMA-Sicherheitscodierungs- und -decodierungsverfahren, das das CDMA-Sicherheitscodierungsverfahren nach Anspruch 1 umfasst, das die folgenden Schritte umfasst:
Empfangen des CDMA-codierten Signals mittels eines Bandpassfilters und Durchführen einer Filterverarbeitung des CDMA-codierten Signals, um ein gefiltertes Signal zu erhalten;
Empfangen des gefilterten Signals durch ein A/D-Modul und Durchführen einer Mittelbandpassabtastung des gefilterten Signals, um ein digitales Zwischenfrequenzsignal zu erhalten;
Empfangen des digitalen Zwischenfrequenzsignals durch ein digitales Abwärtswandlungsmodul, Abwärtswandeln des Zwischenfrequenzsignals in ein Basisbandsignal und Durchführen einer Interferenzverarbeitung an dem Zwischenfrequenzsignal, um ein CDMA-codiertes Basisbandsignal zu erhalten;
Empfangen des CDMA-codierten Basisbandsignals durch ein Basisbandsignal-Interferenzverarbeitungsmodul und Eliminieren eines Nachbarkanals und eines Ein-Ton-Interferenzsignals in dem CDMA-codierten Basisbandsignal, um ein verarbeitetes CDMA-codiertes Basisbandsignal zu erhalten; und
Empfangen des verarbeiteten CDMA-codierten Basisbandsignals durch ein Demodulationsmodul und Wiederherstellen des verarbeiteten CDMA-codierten Basisbandsignals gemäß einer bekannten Adressspreizspektrum-Codenummer, um ein CDMAdecodiertes Signal zu erhalten.

12. CDMA-Sicherheitscodier- und -Decodierungssystem mit dem CDMA-Sicherheitscodierungssystem nach Anspruch 6, ferner umfassend einen Bandpassfilter, ein A/D-Modul, ein digitales Abwärtswandlungsmodul, ein Basisbandsignal-Interferenzverarbeitungsmodul und ein Demodulationsmodul, und ein digitales Abwärtswandlungsmodul; wobei
der Bandpassfilter so konfiguriert ist, dass er das CDMA-codierte Signal empfängt und Außerbandrauschen und ein Störsignal in dem CDMA-codierten Signal unterdrückt, um ein gefiltertes Signal zu erhalten;
das A/D-Modul so konfiguriert ist, dass es das gefilterte Signal empfängt und eine Mittelbandpassabtastung des gefilterten Signals durchführt, um ein digitales Zwischenfrequenzsignal zu erhalten;
das digitale Abwärtswandlungsmodul so konfiguriert ist, dass es das digitale Zwischenfrequenzsignal empfängt, das Zwischenfrequenzsignal in ein Basisbandsignal abwärts wandelt und eine Interferenzverarbeitung an dem Zwischenfrequenzsignal durchführt, um ein CDMA-codiertes Basisbandsignal zu erhalten;
das Basisbandsignal-Interferenzverarbeitungsmodul so konfiguriert ist, dass es das CDMA-codierte Basisbandsignal empfängt und einen Nachbarkanal und ein Einzelton-Interferenzsignal eliminiert, um ein verarbeitetes CDMA-codiertes Basisbandsignal zu erhalten; und
das Demodulationsmodul so konfiguriert ist, dass es das verarbeitete CDMA-codierte Basisbandsignal empfängt und das verarbeitete CDMA-codierte Basisbandsignal gemäß der bekannten Adressspreizspektrum-Codenummer wiederherstellt, um ein CDMAdecodiertes Signal zu erhalten.

## Revendications

1. Procédé de codage AMRC sécurisé, comprenant les étapes consistant à :
recevoir un premier signal d'horloge et convertir le premier signal d'horloge en un signal analogique ;
recevoir un signal de données et un second signal d'horloge, et effectuer un codage biphasé différentiel sur le signal de données pour obtenir un signal numérique codé ;
après conditionnement et amplification du signal analogique, coupler le signal analogique avec le signal numérique codé, pour obtenir un signal en bande de base souhaité, dans lequel un mélange et une superposition deux en un sont effectués sur le signal analogique et le signal numérique codé par un transformateur synthétique avec un rapport de transformation spécifique ;
coder le signal en bande de base pour obtenir un signal en bande de base codé, dans lequel une unité de perturbation reçoit le signal en bande de base et effectue un traitement de perturbation pour obtenir des données perturbées et les envoie à une unité de conversion de données, l'unité de conversion de données reçoit les données perturbées et effectue une conversion de données pour obtenir des données converties, et
les envoie à une unité de brouillage, l'unité de brouillage reçoit les données converties, et ajoute des bits de commande et des bits de perturbation aux données converties, de manière à obtenir des données brouillées, et envoie les données brouillées à une unité de calcul ; l'unité de calcul reçoit les données brouillées, sélectionne des bits de découpage supplémentaires qui répondent à des conditions spécifiques, calcule des bits de vérification, puis ajoute les bits de découpage supplémentaires et les bits de vérification aux données brouillées pour obtenir un signal en bande de base codé avec des bits spécifiques ;
et
effectuer un codage AMRC sur le signal de bande de base codé pour obtenir un signal AMRC codé.

2. Procédé de codage AMRC sécurisé selon la revendication 1, comprenant également les étapes consistant à :
récupérer le signal numérique codé ;
décoder le signal numérique codé récupéré pour obtenir un signal numérique décodé ;
comparer le signal numérique décodé avec le signal de données et couper la sortie du signal numérique codé si le signal numérique décodé est incohérent avec le signal de données ; et
émettre le signal numérique codé si le signal numérique décodé est cohérent avec le signal de données.

3. Procédé de codage AMRC sécurisé selon la revendication 1, avant de recevoir le signal analogique et le signal numérique codé et d'effectuer un traitement de couplage sur le signal analogique et le signal numérique codé, comprenant également les étapes consistant à :
recevoir le signal numérique codé, surveiller le signal numérique codé et couper la sortie du signal analogique et du signal numérique codé si un résultat de surveillance montre que le signal numérique codé est un signal de court-circuit.

4. Procédé de codage AMRC sécurisé selon la revendication 1, dans lequel la réalisation du codage AMRC sur le signal en bande de base codé pour obtenir un signal codé AMRC comprend spécifiquement les étapes consistant à :
effectuer séquentiellement un décodage biphasé différentiel et un décodage Barker sur le signal en bande de base codé pour obtenir un signal décodé en bande de base ;
effectuer une modulation différentielle sur le signal décodé en bande de base pour obtenir un signal modulé différentiel ;
générer un code d'adresse pour une modulation à spectre étalé, et effectuer une modulation à spectre étalé à séquence directe sur le signal modulé différentiel et le code d'adresse pour obtenir un signal modulé à spectre étalé ;
générer une porteuse pour la modulation de porteuse, et effectuer une modulation de porteuse sur le signal modulé à spectre étalé et la porteuse, de sorte que le signal modulé à spectre étalé soit étalé de N fois, pour obtenir un signal de fréquence porteuse ; et
effectuer un traitement d'amplification de puissance et de filtrage sur le signal de fréquence porteuse pour obtenir un signal codé AMRC.

5. Procédé de codage AMRC sécurisé selon la revendication 4, comprenant également :
recevoir, par une boucle à verrouillage de phase, le signal en bande de base codé ; et
commander, par la boucle à verrouillage de phase, la fréquence et la phase dans les processus de décodage biphasé différentiel, de décodage Barker, de modulation différentielle et de génération de code d'adresse en fonction du signal en bande de base codé à synchroniser avec ceux du signal en bande de base codé.

6. Système de codage AMRC sécurisé, comprenant un dispositif de génération de signal en bande de base, un dispositif de codage en bande de base et un dispositif de codage AMRC ; dans lequel le dispositif de génération de signal en bande de base comprend une unité de conversion N/A, une unité de codage biphasé différentiel, une unité de conditionnement et d'amplification et une unité de couplage ;
l'unité de conversion N/A est configurée pour recevoir le premier signal d'horloge et convertir le premier signal d'horloge pour obtenir un signal analogique ;
l'unité de codage biphasé différentiel est configurée pour recevoir le signal de données et le second signal d'horloge, et effectuer un codage biphasé différentiel sur le signal de données pour obtenir un signal numérique codé ;
l'unité de conditionnement et d'amplification est configurée pour effectuer un conditionnement et une amplification sur le signal analogique afin d'obtenir un signal analogique amplifié conditionné ;
l'unité de couplage est configurée pour effectuer un traitement de couplage sur le signal analogique conditionné et amplifié et le signal numérique codé afin d'obtenir un signal en bande de base souhaité, dans lequel un mélange et une superposition deux en un sont effectués sur le signal analogique et le signal numérique codé par un transformateur synthétique avec un rapport de transformation spécifique ;
le dispositif de codage de bande de base est configuré pour coder le signal de bande de base afin d'obtenir un signal de bande de base codé, comportant une unité de perturbation, une unité de conversion de données, une unité de brouillage et une unité de calcul, dans lequel l'unité de perturbation est configurée pour recevoir le signal de bande de base et effectuer un traitement de perturbation afin d'obtenir des données perturbées et de les envoyer à l'unité de conversion de données, l'unité de conversion de données est configurée pour recevoir les données perturbées et effectuer une conversion de données afin d'obtenir des données converties, et de les envoyer à l'unité de brouillage, l'unité de brouillage est configurée pour recevoir les données converties, et ajouter des bits de commande et des bits de perturbation aux données converties, de manière à obtenir des données brouillées, et envoyer les données brouillées à l'unité de calcul ; l'unité de calcul est configurée pour recevoir les données brouillées, sélectionner des bits de découpage supplémentaires qui répondent à des conditions spécifiques, calculer des bits de vérification, puis ajouter les bits de découpage supplémentaires et les bits de vérification aux données brouillées afin d'obtenir un signal de bande de base codé avec des bits spécifiques ; et
le dispositif de codage AMRC est configuré pour effectuer un codage AMRC sur le signal codé en bande de base afin d'obtenir un signal codé AMRC.

7. Système de codage AMRC sécurisé selon la revendication 6, dans lequel le dispositif de génération de signal en bande de base comprend également une unité de collecte, une unité de traitement, une unité de comparaison et une unité de commande ;
l'unité de collecte est configurée pour collecter à nouveau un signal numérique codé ;
l'unité de traitement est configurée pour décoder le signal numérique codé collecté afin d'obtenir un signal numérique décodé ;
l'unité de comparaison est configurée pour comparer le signal numérique décodé avec le signal de données, et la sortie du signal numérique codé est coupée sous le contrôle de l'unité de commande si le signal numérique décodé est incohérent avec le signal de données ; et
le signal numérique codé est émis via l'unité de codage biphasé différentiel si le signal numérique décodé est cohérent avec le signal de données.

8. Système de codage AMRC sécurisé selon la revendication 6, dans lequel le dispositif de génération de signal en bande de base comprend également une unité de surveillance de données ; et avant que l'unité de couplage n'effectue un traitement de couplage sur le signal analogique amplifié conditionné et le signal numérique codé pour obtenir un signal en bande de base, l'unité de surveillance de données reçoit le signal numérique codé, surveille le signal numérique codé et la sortie du signal analogique et du signal numérique codé est coupée si un résultat de surveillance montre que le signal numérique codé est un signal de court-circuit.

9. Système de codage AMRC sécurisé selon la revendication 6, dans lequel le dispositif de codage AMRC comprend une unité de décodage biphasé différentiel, une unité de décodage Barker, une unité de modulation différentielle, une unité de modulation à spectre étalé, une unité de modulation de porteuse et une unité d'amplification et de filtrage de signal ;
l'unité de modulation à spectre étalé comprend un module de déclenchement de code à spectre étalé et un module de modulation AMRC ;
l'unité de modulation de porteuse comprend une source de signal de porteuse et un module de modulation BPSK ;
l'unité de décodage biphasé différentiel effectue un décodage biphasé différentiel sur le signal de bande de base codé pour obtenir un signal décodé initial ;
l'unité de décodage Barker est configurée pour effectuer un décodage Barker sur le signal décodé initial afin d'obtenir un signal décodé en bande de base ;
l'unité de modulation différentielle est configurée pour effectuer une modulation différentielle sur le signal décodé en bande de base afin d'obtenir un signal modulé différentiel ;
le module de déclenchement de code à spectre étalé est configuré pour générer un code d'adresse pour la modulation à spectre étalé ;
le module de modulation AMRC est configuré pour effectuer une modulation à spectre étalé à séquence directe sur le signal modulé différentiel et le code d'adresse pour obtenir un signal modulé à spectre étalé ;
la source de signal de porteuse est configurée pour générer une porteuse pour la modulation de porteuse ;
le module de modulation BPSK est configuré pour effectuer une modulation de porteuse sur le signal modulé à spectre étalé et la porteuse, de manière à ce que le signal modulé à spectre étalé soit étalé N fois, pour obtenir un signal de fréquence porteuse ; et
l'unité d'amplification et de filtrage du signal est configurée pour amplifier et filtrer le signal de fréquence porteuse afin d'obtenir un signal codé AMRC.

10. Système de codage AMRC sécurisé selon la revendication 9, dans lequel l'unité de codage AMRC comprend également une unité de boucle à verrouillage de phase ;
l'unité de boucle à verrouillage de phase est configurée pour recevoir le signal en bande de base codé et pour commander la fréquence et la phase dans les processus de décodage biphasé différentiel, de décodage de Barker, de modulation différentielle et de génération de code d'adresse en fonction du signal en bande de base codé, afin qu'elles soient synchronisées avec celles du signal en bande de base codé.

11. Procédé de codage et de décodage AMRC sécurisé comprenant le procédé de codage AMRC sécurisé selon la revendication 1, comprenant les étapes consistant à :
recevoir, par un filtre passe-bande, le signal codé AMRC, et effectuer un traitement de filtrage sur le signal codé AMRC pour obtenir un signal filtré ;
recevoir, par un module A/N, le signal filtré, et effectuer un échantillonnage passe-bande médiane sur le signal filtré pour obtenir un signal numérique de fréquence intermédiaire ;
recevoir, par un module de conversion descendante numérique, le signal numérique de fréquence intermédiaire, effectuer une conversion descendante du signal de fréquence intermédiaire en un signal de bande de base, et effectuer un traitement d'interférence sur le signal de fréquence intermédiaire pour obtenir un signal de bande de base codé AMRC ;
recevoir, par un module de traitement d'interférence de signal en bande de base, le signal en bande de base codé AMRC, et éliminer un canal adjacent et un signal d'interférence à tonalité unique dans le signal en bande de base codé AMRC pour obtenir un signal en bande de base codé AMRC traité ; et
recevoir, par un module de démodulation, le signal de bande de base codé AMRC traité, et restaurer le signal de bande de base codé AMRC traité selon un numéro de code à spectre étalé d'adresse connu pour obtenir un signal décodé AMRC.

12. Système de codage et de décodage AMRC sécurisé comprenant le système de codage AMRC sécurisé selon la revendication 6, comprenant également un filtre passe-bande, un module A/N, un module de conversion descendante numérique, un module de traitement d'interférence de signal en bande de base et un module de démodulation, et un module de conversion descendante numérique ; dans lequel
le filtre passe-bande est configuré pour recevoir le signal codé AMRC et supprimer le bruit hors bande et un signal d'interférence dans le signal codé AMRC, pour obtenir un signal filtré ;
le module A/N est configuré pour recevoir le signal filtré et effectuer un échantillonnage passe-bande médiane sur le signal filtré pour obtenir un signal numérique de fréquence intermédiaire ;
le module de conversion descendante numérique est configuré pour recevoir le signal numérique de fréquence intermédiaire, effectuer une conversion descendante du signal de fréquence intermédiaire en un signal de bande de base, et effectuer un traitement d'interférence sur le signal de fréquence intermédiaire pour obtenir un signal de bande de base codé AMRC ;
le module de traitement d'interférence de signal de bande de base est configuré pour recevoir le signal de bande de base codé AMRC et éliminer un canal adjacent et un signal d'interférence à tonalité unique pour obtenir un signal de bande de base codé AMRC traité ; et
le module de démodulation est configuré pour recevoir le signal de bande de base codé AMRC traité, et restaurer le signal de bande de base codé AMRC traité selon le numéro de code à spectre étalé d'adresse connu pour obtenir un signal décodé AMRC.
